# EUROPEAN PATENT APPLICATION

(11) **EP 3 300 014 A1**
(43) Date of publication of application: **28.03.2018**
(21) Application number: 15892579.2
(22) Date of filing: 20.05.2015
(51) Int. Cl.: G06Q 50/16

(54) **EQUIPMENT MANAGEMENT DEVICE, EQUIPMENT MANAGEMENT SYSTEM, AND PROGRAM**

(71) Applicant: Mitsubishi Electric Corporation, Chiyoda-ku Tokyo 100-8310 (JP)
(72) Inventor: ISHIZAKA Taichi, Tokyo 100-8310 (JP)
(74) Representative: Studio Torta S.p.A.
(86) International application number: PCT/JP2015/064445
(87) International publication number: WO 2016/185580

(57) **Abstract**

A facility management apparatus (10) outputs operation target information to a remote controller (30). The operation target information includes apparatus identification information for identification of the facility management apparatus (10) on the Internet (90) and group identification information that is designation information for designation of a facility device (20) to be remotely operated. The facility management apparatus (10) receives from a remote server (50) a registration request transmitted by a mobile terminal (60) that receives the operation target information. The facility management apparatus (10) registers the mobile terminal (60) that is the source of the registration request as a device enabled to remotely operate the facility device (20).

## Description

### Technical Field

The present disclosure relates to a facility management apparatus, a facility management system, and a program for managing a facility device, such as an air conditioner, installed in a building such as an office building.

### Background Art

A facility management apparatus is often installed in a building, such as an office building including facility devices, to centrally monitor and operate the facility devices. Each facility device is typically provided with a remote controller, and a user can monitor and operate the facility device using the remote controller.

In recent years, techniques are known for monitoring and operating the facility devices by use of mobile terminals, such as smartphones, instead of the remote controller. Examples of the techniques include a system in which the mobile terminal and the facility management apparatus are connected to a wireless LAN to enable monitoring and operation of a facility device through a browser on a screen of the mobile terminal.

In addition, Patent Literature 1 discloses a central controller for controlling an air conditioning apparatus, a floor heating unit, a bathtub room dryer and heater, a heat source device, or the like, using the Internet instead of using the wireless LAN, to receive email signals transmitted by a mobile phone terminal via a server of an Internet service provider and the Internet.

### Citation List

### Patent Literature

Patent Literature 1: Unexamined Japanese Patent Application Kokai Publication No. 2002-243249

### Summary of Invention

### Technical Problem

The technique of enabling the monitoring and operation of the facility device via the wireless LAN from the mobile terminal involves resetting of the wireless LAN environment in the office building or notifying a user of the mobile terminal about the setting information for connection to the wireless LAN. This imposes a great burden on an administrator, and is disadvantageous in cost and labor.

The technique disclosed in Patent Literature 1 involves, when a one-to-one correspondence between the mobile terminals and the facility devices is desired, registration of a correspondence relationship in both the central controller and the mobile terminals. The correspondence relationship indicates association between details of emails and the facility devices to be operated upon transmission of the emails. Such a technique suffers from an increase in effort of the administrator with an increase in number of the facility devices and users.

The present disclosure has been made based on the above-described background, and an objective of the present disclosure is to provide a facility management apparatus and the like that facilitate setting for enabling a mobile terminal to operate a facility device.

### Solution to Problem

To achieve the foregoing objective, the present disclosure provides a facility management apparatus for managing facility devices, the facility management apparatus including: an outputter configured to output operation target information, the operation target information including apparatus identification information for identification of the facility management apparatus on a network and designation information for designation of a facility device to be remotely operated among the facility devices, a receiver configured to receive a registration request from a mobile terminal that receives the operation target information and is connected via the network based on the apparatus identification information included in the operation target information, a registrator configured to register the mobile terminal that is a source of the registration request, as a device enabled to remotely operate the facility device designated by the designation information included in the operation target information.

### Advantageous Effects of Invention

According to the present disclosure, the facility management apparatus outputs the operation target information for remote operation, thereby facilitating setting for enabling the facility device to be operated by the mobile terminal.

### Brief Description of Drawings

FIG. 1 is a drawing illustrating an overall configuration of a facility management system according to an embodiment of the present disclosure;
FIG. 2 is a block diagram illustrating a configuration of a facility management apparatus;
FIG. 3 is a drawing illustrating an example configuration of a remote controller operation table;
FIG. 4 is a drawing illustrating an example configuration of a mobile operation permission table;
FIG. 5 is a block diagram illustrating a configuration of a remote controller;
FIG. 6 is a block diagram illustrating a configuration of a mobile terminal;
FIG. 7 is a flowchart illustrating procedures of a registration process;
FIG. 8 is a drawing illustrating an example registration screen;
FIG. 9 is a drawing illustrating an example registration confirmation screen; and
FIG. 10 is a flowchart illustrating procedures of a remote operation process.

### Description of Embodiments

Embodiments of the present disclosure are described in detail with reference to the drawings. The same reference signs are used for the same or equivalent parts throughout the drawings.

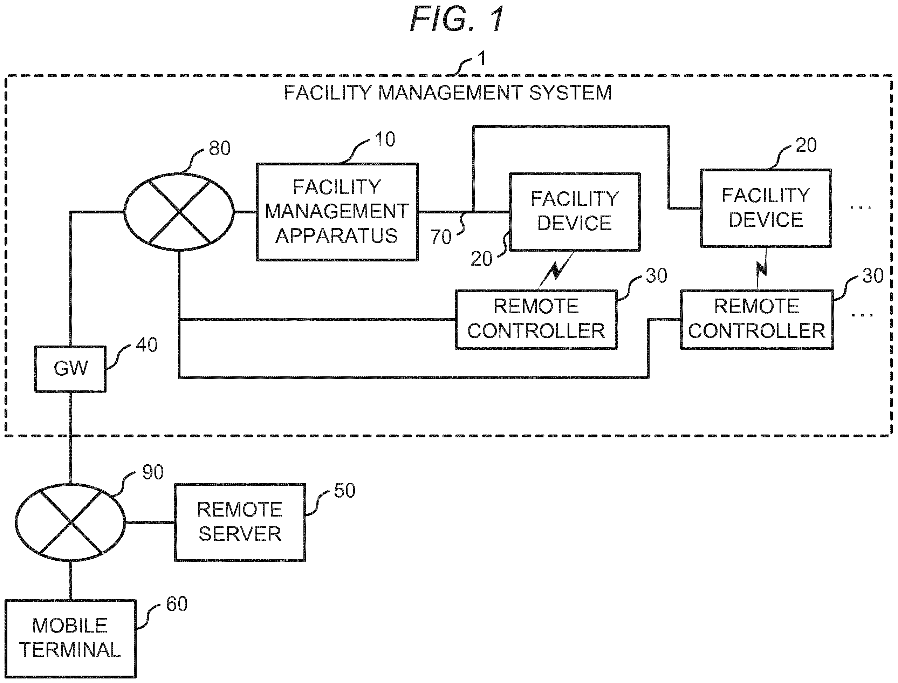

A facility management system 1 according to an embodiment of the present disclosure is described with reference to FIG. 1. The facility management system 1 includes a facility management apparatus 10, facility devices 20, such as air conditioners and the like, connected via a private communication line 70 to the facility management apparatus 10, remote controllers 30 for operating the facility devices 20, and a gateway device (GW) 40. The facility management apparatus 10 is also connected via a local area network (LAN) 80, the GW 40, and the Internet 90, to a remote server 50. The remote server 50 is in turn connected via the Internet 90 to a mobile terminal 60 that is registered as a device enabled to remotely operate the facility devices 20. Although FIG. 1 illustrates only a single facility management system 1, in practice, multiple facility management systems 1 are connected to the Internet 90.

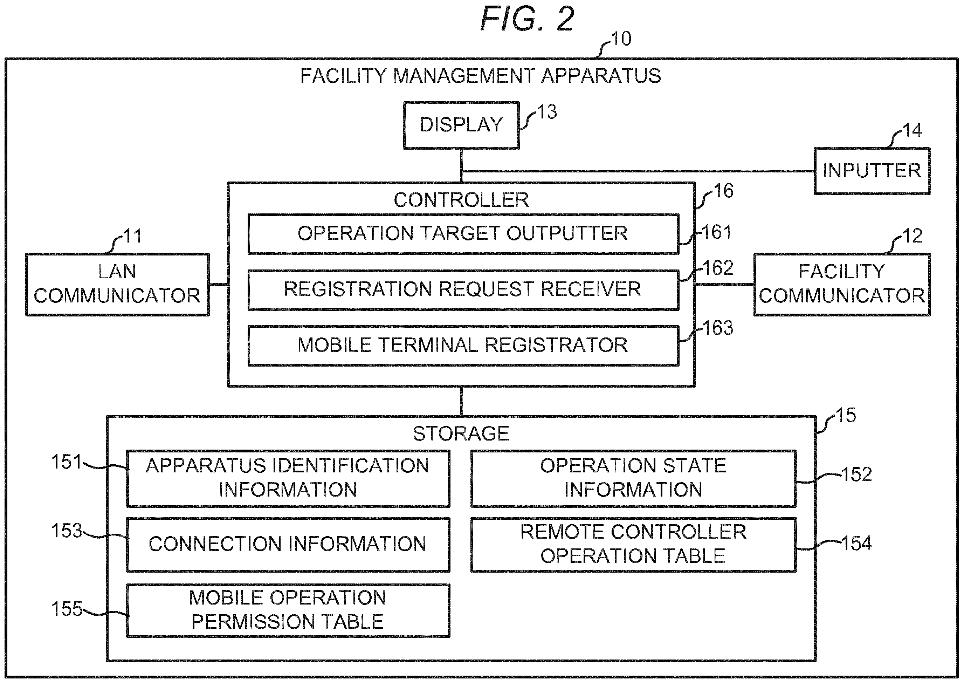

The facility management apparatus 10, which is disposed in, for example, a management office or the like of an office building, is an apparatus for central management of the facility devices 20 in the office building. As illustrated in FIG. 2, the facility management apparatus 10 includes a LAN communicator 11, a facility device communicator 12, a display 13, an inputter 14, a storage 15, and a controller 16.

The LAN communicator 11 includes a communication device for connection to the LAN 80, and the facility management apparatus 10 serves as an interface for connection to the LAN 80.

The facility device communicator 12 serves as an interface to the private communication line 70. The private communication line 70 is not necessarily limited to a private communication line, and may include a configuration using a general-purpose communication line or a virtual private network (VPN).

The display 13 is, for example, a liquid crystal display (LCD), and displays, under control of the controller 16, various screens including screens for management of the facility devices 20.

The inputter 14 may be, for example, a keyboard, a mouse, a touch panel, and/or the like. When the inputter 14 is a touch panel, the inputter 14 is disposed on a display screen of the display 13. When a user operates the inputter 14, a signal dependent on the operation content is output to the controller 16, thereby enabling the user to perform various operations for the facility devices 20.

The storage 15 is a readable and writable non-volatile storage device, such as a hard disk drive, flash memory, and the like, and stores various types of data necessary for the controller 16 to manage each facility device 20. The storage 15 stores, for example, apparatus identification information 151, operation state information 152, connection information 153, a remote controller operation table 154, and a mobile operation permission table 155.

The apparatus identification information 151 is a unique ID for identifying the facility management apparatus 10. The apparatus identification information 151 is data encrypted and tied to a date of manufacture, a serial number, and the like of the facility management apparatus 10.

In the present embodiment, the apparatus identification information 151 is information for identification of the facility management apparatus 10 over the Internet 90. That is, in a registration process described below, the mobile terminal 60 transmits a registration request including the apparatus identification information 151 to the remote server 50, and the remote server 50 identifies the facility management apparatus 10 on the Internet 90 based on the apparatus identification information 151 included in the received registration request, connects to the identified facility management apparatus 10, and transmits the registration request thereto.

The operation state information 152 is information indicating the current operation state of each facility device 20, for example, a run or stop state, a mode of operation such as cooling or heating, a set temperature, and the like. The operation state information 152 is updated whenever there is periodic reception of the operation state from any of the facility device 20.

The connection information 153 is data necessary for the facility management apparatus 10 to connect to each facility device 20. The connection information 153 includes address information for identification of each facility device 20 on the private communication line 70, and group identification information. The group identification information is information, such as a unique number for identifying a group of a single facility device 20 or a group of multiple facility devices 20. The facility management apparatus 10 or the remote controller 30 can collectively operate the facility devices 20 belonging to a group by designating the group identification information.

In the present embodiment, the group identification information is used as designation information for designation of the facility devices 20 to be remotely operated. That is, in the registration process described below, the group identification information of the group to which the facility devices 20 to be collectively operated by the remote controller 30 belongs is output from the remote controller 30. The mobile terminal 60 that reads the group identification information registers, as remotely-operable devices, the facility devices 20 belonging to the group indicated by the group identification information.

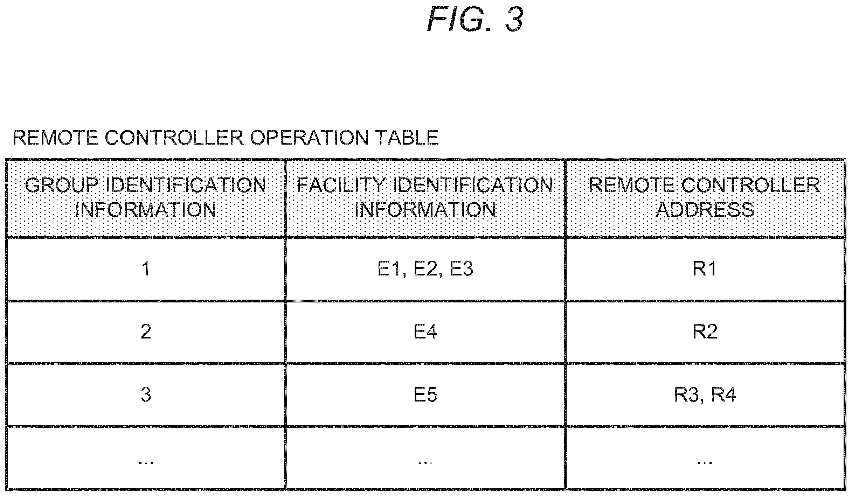

The remote controller operation table 154 is a table that defines the facility device 20 remotely operable by the remote controller 30. Specifically, as illustrated in FIG. 3, the remote controller operation table 154 includes the group identification information, identification information (facility identification information) of the facility devices 20 included in each group, and address (remote controller address), on the LAN 80, of the remote controller that can operate the facility device 20 included in each group. In the remote controller operation table 154, the group identification information, the facility identification information, and the remote controller address are registered in association with one another for each group of the facility devices 20. As an example, the entry at the top of FIG. 3 shows that the remote controller 30 having a remote controller address R1 can operate the three facility devices 20 together (collectively) that belong to the group "1" of the group identification information and have the facility identification information "E1", "E2", and "E3".

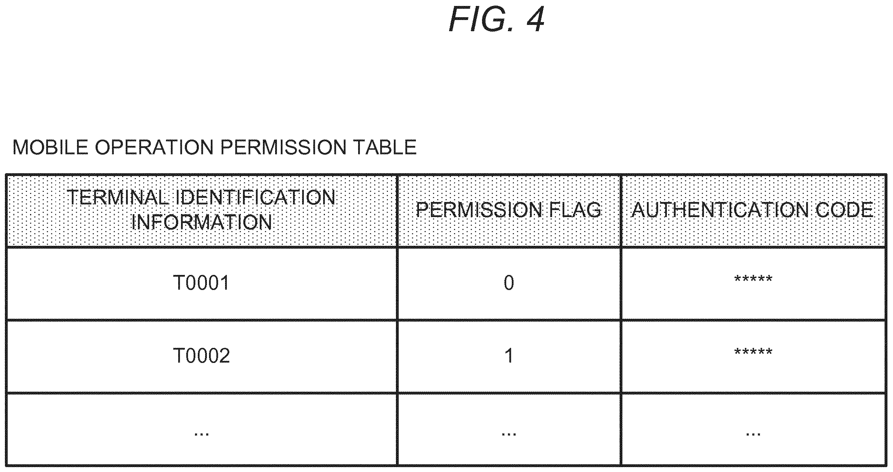

The mobile operation permission table 155 is a table in which the mobile terminal 60 that is enabled to remotely operate the facility device 20 is registered. Specifically, as illustrated in FIG. 4, the mobile operation permission table 155 includes terminal identification information of the mobile terminal 60 that is enabled to perform remote operation, a permission flag, and an authentication code. In the mobile operation permission table 155, the terminal identification information, the permission flag, and the authentication code are registered in association with one another.

The permission flag is a flag indicating whether a user permits the mobile terminal 60 as a device enabled to perform remote operation. The permission flag "0" indicates a state for waiting for permission, and the permission flag "1" indicates that the permission is obtained.

Returning to FIG. 2, the controller 16 includes a central processing unit (CPU) (unillustrated) and memory (unillustrated), such as read only memory (ROM), random access memory (RAM), and the like, and controls each component of the facility management apparatus 10 by the CPU executing a program stored in the memory. The controller 16 includes, as functional components according to the present disclosure, an operation target outputter 161, a registration request receiver 162, and a mobile terminal registrator 163.

The operation target outputter 161 outputs operation target information to each remote controller 30 at the initial startup of the facility management apparatus 10. The operation target information includes the apparatus identification information 151, the group identification information of the facility device 20 to be remotely operated by the remote controller, and the authentication code.

The registration request receiver 162 receives the registration request that is transmitted via the remote server 50 by the mobile terminal 60. The registration request includes the group identification information, the apparatus identification information 151, the authentication code, and the terminal identification information that is the ID of the mobile terminal 60.

The mobile terminal registrator 163 causes the remote controller 30 to display a registration confirmation screen when authenticating the mobile terminal 60 using the authentication code included in the received registration request. Upon receiving the confirmation completion notification from the remote controller 30, the mobile terminal registrator 163 registers, as a device enabled to perform remote operation, the mobile terminal 60 that is a source of the registration request. Details of processes executed by the operation target outputter 161, the registration request receiver 162, and the mobile terminal registrator 163 are described below.

Returning to FIG. 1, the facility devices 20 are equipment to be monitored or controlled by the facility management apparatus 10, and can be, for example, an air conditioner, a water heater, a power generation apparatus, and/or the like. Each facility device 20 has the capability of connecting to the LAN 80, and can be operated by the facility management apparatus 10 as well as by the remote controller 30. The facility device 20 is also operated (remotely operable) via the facility management apparatus 10 by the external mobile terminal 60 that is registered as the device enabled to perform remote operation in the registration process described below. The storage of the facility device 20 stores beforehand the facility identification information that is a product number or the like for uniquely identifying the facility device 20, and the group identification information of the group to which the facility device 20 belongs.

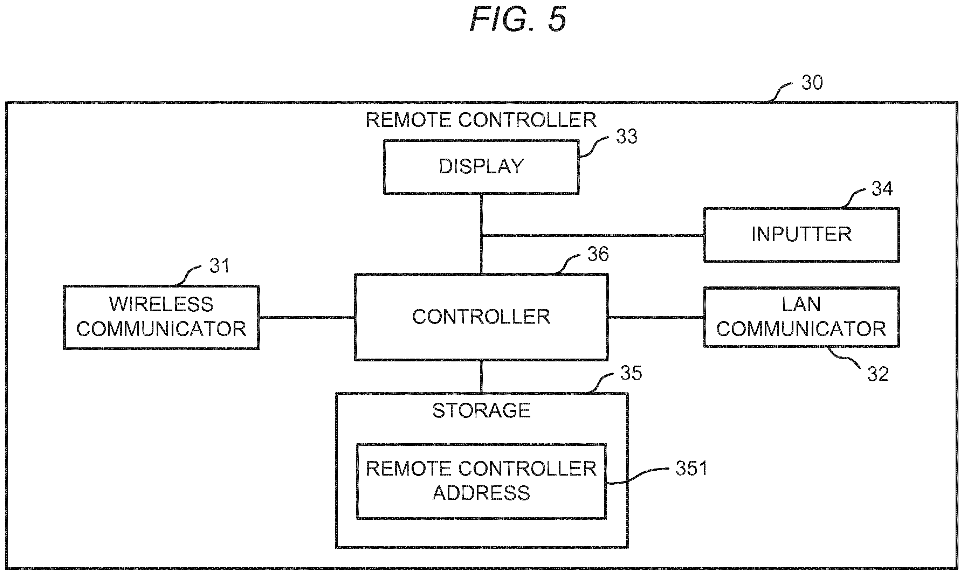

Returning to FIG. 1, the remote controllers 30 are devices for operating the facility devices 20. Each remote controller 30 includes, as illustrated in FIG. 5, a wireless communicator 31, a LAN communicator 32, a display 33, an inputter 34, a storage 35, and a controller 36.

The wireless communicator 31 includes an infrared communication unit and the like, and communicates, under control of the controller 36, with the facility device 20 by near-field wireless communication. For example, the wireless communicator 31 transmits an operation command to the facility device 20.

The LAN communicator 32 includes a communication device for connection to the LAN, and serves, under control of the controller 36, as an interface for connecting the remote controller 30 to the LAN 80. For example, in the registration process described below, the LAN communicator 32 receives the operation target information from the facility management apparatus 10 or transmits the confirmation completion notification to the facility management apparatus 10.

The display 33, which can be a liquid crystal display (LCD) or the like, displays various screens under control of the controller 36. For example, in the registration process described below, the display 33 displays the registration screen on which the operation target information is coded using a two-dimensional code, such as a QR Code (registered trademark), or displays the registration confirmation screen.

The inputter 34, which can be various types of key buttons or the like, outputs to the controller 36 a signal dependent on the operation received from a user.

The storage 35 is a readable and writable non-volatile storage device, such as flash memory and the like, and stores various types of data. For example, the storage 35 stores a remote controller address 351 beforehand. The remote controller address 351 is a unique ID for self-identification of the remote controller address 351 on the LAN 80. In the registration process described below, the storage 35 stores the operation target information (apparatus identification information 151, group identification information, and authentication code) transmitted by the facility management apparatus 10.

Returning to FIG. 1, the GW 40 relays data for communication between the Internet 90 and the LAN 80. For example, the GW 40 transmits the operation command received from the remote server 50 via the Internet 90 to the facility management apparatus 10 that is connected to the LAN 80.

The remote server 50 has the capability of connecting to the Internet 90, and is connected via the Internet 90 to the mobile terminal 60 to enable data communication with the mobile terminal 60. The remote server 50 keeps a table that defines a correspondence relationship between the apparatus identification information 151 and the address of the facility management apparatus 10, and is capable of establishing data communication via the Internet 90, the GW 40, and the LAN 80 with the facility management apparatus 10. For example, the remote server 50 transmits the registration request for remote operation and the operation request, which are received via the Internet 90 from the mobile terminal 60, to the corresponding facility management apparatus 10.

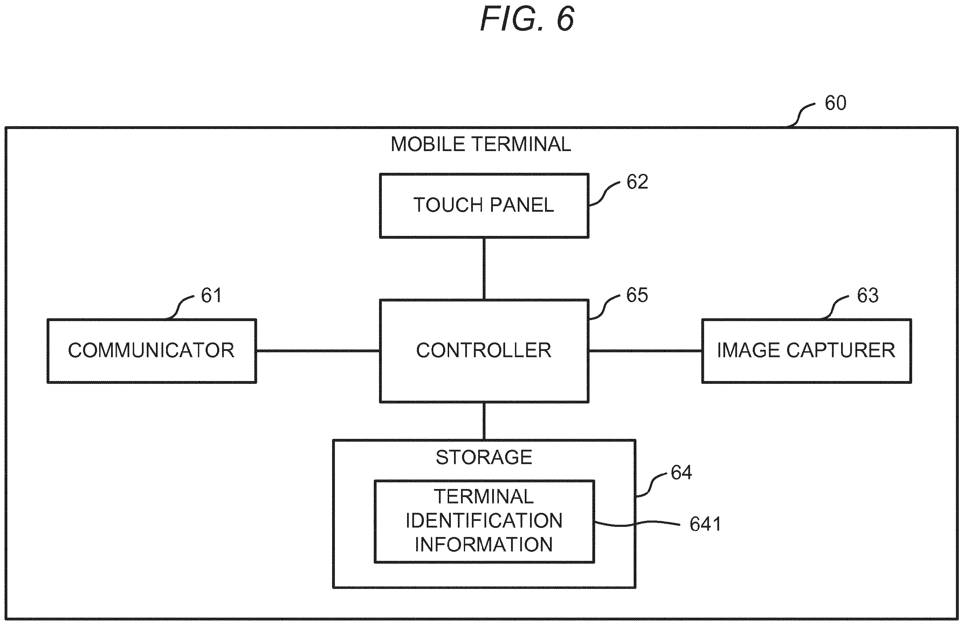

The mobile terminal 60, which can be, for example, a smartphone, has the capability of connecting to the Internet 90, or the image capturing capability in addition to the telephony capability. The mobile terminal 60 is registered as a device enabled to remotely operate the facility device 20 in the registration process described below. The mobile terminal 60 includes, as illustrated in FIG. 6, a communicator 61, a touch panel 62, an image capturer 63, a storage 64, and a controller 65.

The communicator 61 includes a communication device for connection to the Internet 90, and communicates, under control of the controller 65, with the remote server 50 via the Internet 90.

The touch panel 62, which may include a liquid crystal panel and a touch pad, displays various screens. Upon receiving a touch operation from a user through the displayed screen, the touch panel 62 outputs, to the controller 65, information indicating a location on the screen where the touch operation is received. For example, the user operates the touch panel 62 to provide an instruction for the remote operation of the facility device 20.

The image capturer 63 includes a camera, and performs an image capturing operation. For example, the image capturer 63 captures a two-dimensional code displayed on the display 33 of the remote controller 30.

The storage 64 is a readable and writable non-volatile storage device, such as flash memory and the like, and stores various types of data. For example, the storage 64 stores terminal identification information 641 for uniquely identifying the mobile terminal 60 beforehand. In the registration process described below, the storage 64 stores the information (apparatus identification information 151, group identification information, and authentication code) included in the registration request received from the remote server 50.

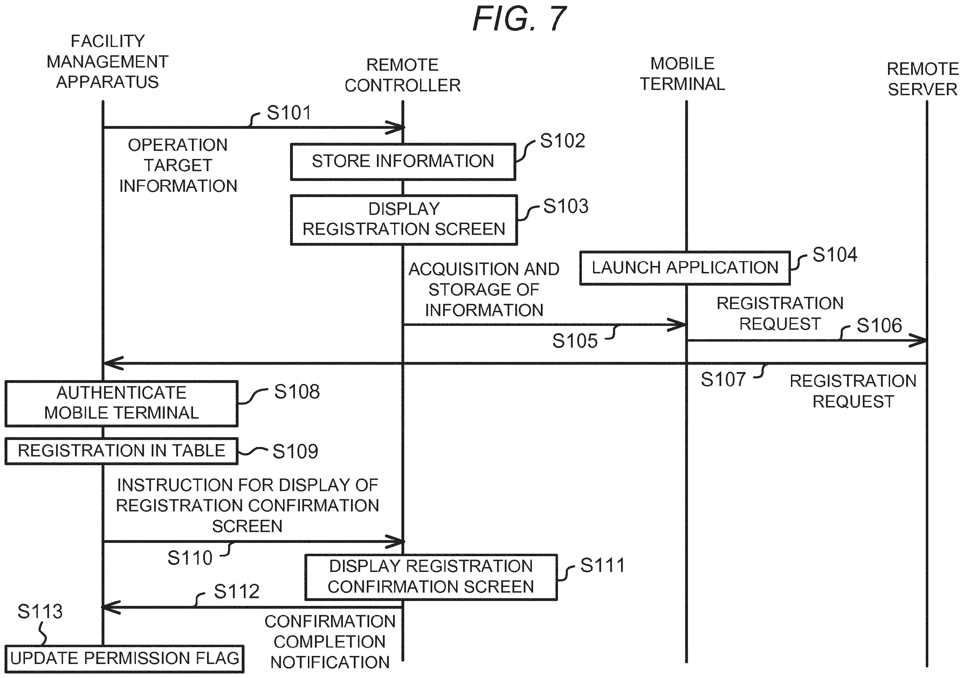

Next, operation of the registration process for registering the mobile terminal 60 as the device enabled to perform remote operation in the facility management system 1 is described below using a flowchart of FIG. 7.

Upon initial power-on of the facility management apparatus 10 after installation of the facility management system 1 in a building such as an office building, the controller 16 performs a setting of each remote controller 30 to register the facility device 20 that is to be operated by the remote controller 30. Specifically, the controller 16 specifies, with reference to the remote controller operation table 154, the group identification information of the group to which the facility device 20 to be operated by the remote controller 30 belongs. The controller 16 then transmits the operation target information, including the specified group identification information, the apparatus identification information 151, and the authentication code, to each remote controller 30 (Step S101). The authentication code is information for use to authenticate the mobile terminal 60, and can be, for example, random numbers that are generated each time.

The controller 36 of the remote controller 30 having received the operation target information causes the storage 35 to store the information (group identification information, apparatus identification information 151, and authentication code) included in the operation target information (Step S102). This enables the remote controller 30 to operate the facility device 20 that belongs to the group indicated by the group identification information stored in the storage 35. That is, after this processing, the remote controller 30 is enabled to transmit an operation command including the stored group identification information. The facility device 20 that has received the operation command executes processing in accordance with the operation command only when the group identification information included in the operation command corresponds to the own facility device 20.

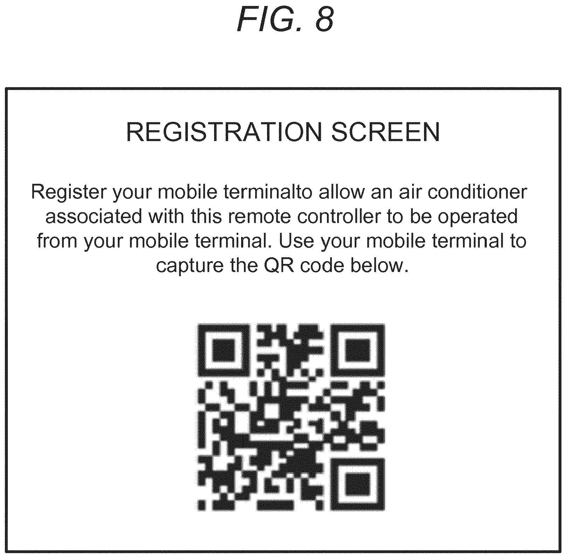

Then, a user performs a predetermined operation from the inputter 34 of the remote controller 30 to cause the registration screen to be displayed. In response to the operation, the controller 36 of the remote controller causes the display 33 to display the registration screen as illustrated in FIG. 8, on which the information (group identification information, and apparatus identification information 151, authentication code) stored in Step S102, and the own remote controller address 351 are coded using the two-dimensional code, such as the QR Code (registered trademark), and displayed (Step S103). The controller 36 may encrypt the information before the coding.

Next, the user performs a particular operation from the touch panel 62 of the mobile terminal 60, and launches an application for remote operation of the facility device 20 (Step S104). Then the user captures the two-dimensional code on the registration screen with the image capturer 63 of the mobile terminal in accordance with instructions on the screen displayed on the touch panel 62 by processing of the application. The controller 65 of the mobile terminal 60 acquires the coded information (apparatus identification information 151, group identification information, authentication code, and remote controller address 351) through analysis of the captured image, and stores the information in the storage 64 (Step S105).

Then the controller 65 of the mobile terminal 60 transmits the registration request including the information acquired in Step S105 and the terminal identification information 641 via the Internet 90 to the remote server 50 (Step S106).

Upon reception of the registration request, the remote server 50 transmits this registration request via the Internet 90, the GW 40, and the LAN 80 to the facility management apparatus 10 that is identified with the apparatus identification information 151 included in the registration request (Step S107).

The controller 16 of the facility management apparatus 10 authenticates the mobile terminal 60 by verifying that the authentication code included in the received registration request matches the authentication code included in the operation target information transmitted to the remote controller 30 in Step S101 (Step S108). When the authentication codes do not match, the controller 16 ends the process as an error because the registration request could be transmitted by the mobile terminal 60 of an unauthorized third party.

After verifying that the authentication codes match, the controller 16 of the facility management apparatus 10 newly registers a record including the terminal identification information included in the received registration request and the authentication code in the mobile operation permission table 155 (Step S109). The permission flag of the record newly registered in this process is set to "0", which indicates that approval is pending.

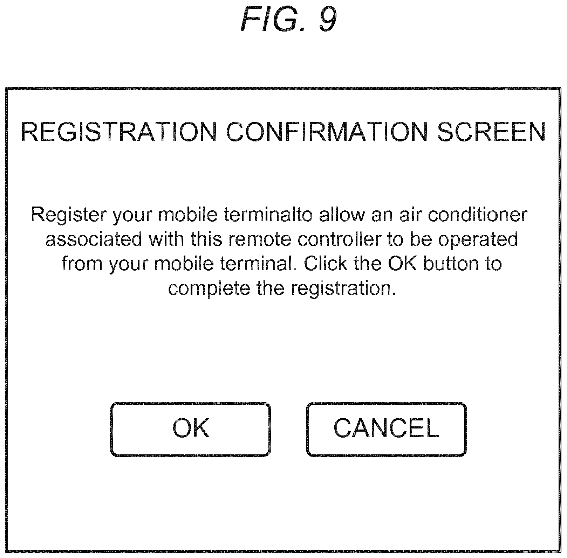

Next, the controller 16 instructs the remote controller 30, which has the remote controller address 351 included in the received registration request, to display the registration confirmation screen (Step S110). In response to the instruction, the controller 36 of the remote controller 30 causes the display 33 to display the registration confirmation screen as illustrated in FIG. 9 (Step S111).

The user operates the inputter 34 of the remote controller 30 to perform an operation indicating the user's confirmation from the registration confirmation screen (in the example of FIG. 9, clicking of the "OK" button), and in response to this operation, the controller 36 of the remote controller 30 transmits the confirmation completion notification to the facility management apparatus 10 (Step S112). The controller 16 of the facility management apparatus 10 that has received the confirmation completion notification updates the permission flag of the record, registered in the mobile operation permission table 155 in Step S109, to "1", indicating that permission is granted (Step S113). This ends the registration process.

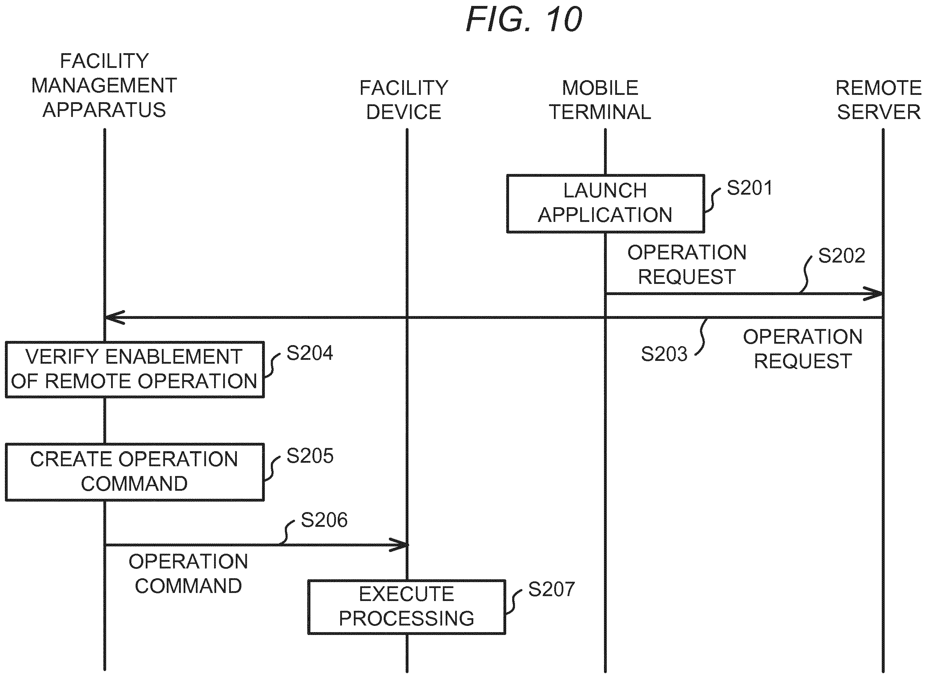

Next, the operation of remote operation processing for remote control of the facility device 20 from the mobile terminal 60 that is registered as a device enabled to perform remote operation in the above-mentioned registration process is described below using a flowchart of FIG. 10.

A user firstly performs a particular operation from the touch panel 62 of the mobile terminal 60, and launches an application for remote control of the facility device 20 (Step S201). The user then operates the touch panel 62 to input content of operation for the facility device 20 via the screen of the launched application. In response to the input operation, the controller 65 of the mobile terminal 60 transmits, via the Internet 90 to the remote server 50, the operation request including operation content information indicating contents of the input operation, the apparatus identification information 151 acquired from the remote controller 30 in Step S105 of the registration process (FIG. 7) and stored in the storage 64, and the group identification information (Step S202).

Upon receiving the operation request, the remote server 50 transmits the operation request to the facility management apparatus 10 that is identified by the apparatus identification information 151 included in the operation request (Step S203).

Alternatively, the remote server 50 may keep the operation request received from the mobile terminal 60, and upon a periodic request from the facility management apparatus 10, transmit the kept operation request to the facility management apparatus 10. In this case, the remote server 50 may store the operation request, which is received from the mobile terminal 60, in a folder having a name of the apparatus identification information 151 included in the operation request. Then the controller 16 of the facility management apparatus 10 may acquire the operation request stored in the folder having the name that is the same as the name of the own apparatus identification information 151.

Then, after receiving (acquiring) the operation request, the controller 16 of the facility management apparatus 10 verifies that the mobile terminal 60, which is a source of the registration request, is registered in the preceding registration process as the device enabled to perform remote operation (Step S204). Specifically, it may suffice that the controller 16 verifies whether the record including the terminal identification information 641 included in the received operation request and the authentication code is registered in the mobile operation permission table 155 and the permission flag of the record is "1", indicating completion of the registration. Should the record not be registered in the mobile operation permission table 155, the controller 16 ends the process as an error.

After completion of the verification, the controller 16 creates an operation command for the facility device 20 to perform the operation indicated by the operation content information included in the received operation request (Step S205). Then the controller 16 specifies, with reference to the remote controller operation table 154, the facility device 20 belonging to the group indicated by the group identification information included in the received operation request, and transmits the created operation command to the specified facility device 20 (Step S206). The facility device 20 that has received the operation command executes processing in accordance with the operation command (Step S207). This ends the remote operation process.

As described in detail above, the facility management apparatus 10 according to the present embodiment outputs to the remote controller 30 the operation target information including the apparatus identification information 151 for identifying the facility management apparatus 10 on a network (Internet 90) and the group identification information that is designation information for designation of the facility device 20 to be remotely controlled. The remote controller 30 displays the operation target information coded using the two-dimensional code, and the mobile terminal 60 reads the coded operation target information. When the facility management apparatus 10 receives the registration request transmitted by the mobile terminal 60 that reads the operation target information and is connected via the Internet 90 to the facility management apparatus 10 based on the apparatus identification information 151 included in the operation target information, the facility management apparatus 10 registers the mobile terminal 60 as the device enabled to remotely operate the facility device 20 belonging to the group identified by the group identification information. This series of registration processes does not require special steps, such as change of setting of the network environment by the administrator, and thus can be easily performed by a user even without special knowledge about a network. Thus the present disclosure enables easy registration of the mobile terminal 60 as the device enabled to perform remote operation.

According to the present embodiment, the registration screen (FIG. 8), on which the operation target information is coded, is displayed on the display 33 of the remote controller 30 in the registration process. The final registration confirmation needs to be made through the registration confirmation screen (FIG. 9) displayed on the remote controller 30. Since only the user who is actually permitted to operate the remote controller 30 can register the mobile terminal 60, an unauthorized external third party is prevented from access for registration from the third party's terminal.

According to the present embodiment, the facility management apparatus 10 outputs the operation target information including the authentication code to the remote controller 30, and when the authentication code does not match the authentication code included in the registration request transmitted by the mobile terminal 60, the facility management apparatus 10 does not register the mobile terminal as the device enabled to perform remote operation. This enables rejection of the registration request from an unauthorized mobile terminal 60 thereby improving security.

According to the present embodiment, the facility management apparatus 10 does not register the mobile terminal 60 as the device enabled to perform remote operation immediately after reception of the registration request from the mobile terminal 60, but instead thereafter, registers the mobile terminal 60 as the device enabled to perform remote operation upon reception of the confirmation completion notification from the remote controller 30. This prevents the unauthorized third party from performing registration thereby improving security.

The present disclosure is not limited to the above embodiment, and various modifications can be of course made without departing from the sprit and scope of the invention.

For example, in the present embodiment, the operation target information and the like are acquired by displaying the registration screen (FIG. 8) on the display 33 of the remote controller 30 and reading the registration screen by the mobile terminal 60. However, the registration screen may be displayed on other devices besides the remote controller 30. For example, the registration screen may be displayed on the display 13 of the facility management apparatus 10 or a personal computer or the like connected to the LAN 80, and may be read by the mobile terminal 60. In this case, the controller 16 of the facility management apparatus 10 may receive from a user a selection input of the facility device 20 that the user wants to remotely operate, and display on the display 13 the operation target information including the group identification information of the group to which the selected facility device 20 belongs.

In the above embodiment, the registration confirmation screen (FIG. 9) is displayed on the remote controller 30 and the user is prompted for confirmation, but this process is not necessarily required. That is, once the record is registered in the mobile operation permission table 155 (Step S109 of FIG. 7), the registration of the mobile terminal as the device enabled to perform remote operation may be completed. In this case, the permission flag in the mobile operation permission table 155 is unnecessary.

The operation target information, such as the apparatus identification information 151 and the group identification information, may be displayed on the screen of the remote controller 30 or the facility management apparatus 10 in text other than with the two-dimensional code (QR Code (registered trademark)) as illustrated in FIG. 8, and a user may operate the touch panel 62 of the mobile terminal 60 to directly input the information. When the mobile terminal 60 is compatible with the near-field wireless communications, such as the Bluetooth and the like, the operation target information and the like may be acquired from the facility management apparatus 10 or the remote controller 30 through the near-field wireless communications.

For example, an operation program that defines the operation of the facility management apparatus 10 according to the present embodiment may be applied to an existing personal computer, an information terminal device, or the like, to enable the personal computer or the like to serve as the facility management apparatus 10 according to the present disclosure.

Any distribution method of such a program can be selected, and the program may be distributed in a form of a computer-readable recording medium storing the program, such as a compact disk read-only memory (CD-ROM), a digital versatile disk (DVD), a magneto optical disk (MO), a memory card, and the like, or via a communication network, such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure may be preferably applied in a system, such as a home energy management system (HEMS).

### Reference Signs List

- 1: Facility management system

- 10: Facility management apparatus
- 20: Facility device
- 30: Remote controller
- 40: Gateway device (GW)
- 50: Remote server
- 60: Mobile terminal
- 70: Private communication line
- 80: LAN
- 90: Internet

## Claims

1. A facility management apparatus for managing facility devices, the facility management apparatus comprising:
an outputter configured to output operation target information, the operation target information including apparatus identification information for identification of the facility management apparatus on a network and designation information for designation of a facility device to be remotely operated among the facility devices;
a receiver configured to receive a registration request from a mobile terminal that receives the operation target information and is connected via the network based on the apparatus identification information included in the operation target information; and
a registrator configured to register the mobile terminal that is a source of the registration request, as a device enabled to remotely operate the facility device designated by the designation information included in the operation target information.

2. The facility management apparatus according to claim 1, wherein
the outputter is configured to output the operation target information that further includes an authentication code, and
the registrator is configured to authenticate the mobile terminal using the authentication code included in the registration request, and when the mobile terminal is authenticated, register the mobile terminal as the device enabled to perform remote operation.

3. The facility management apparatus according to claim 1 or 2, wherein the outputter is configured to cause display of a two-dimensional coded image of the operation target information.

4. The facility management apparatus according to any one of claims 1 to 3, wherein the outputter is configured to output the operation target information to a remote controller capable of operating at least one facility device of the facility devices.

5. The facility management apparatus according to claim 4, wherein the outputter is configured to output the operation target information including, as designation information, group identification information of a group to which the at least one facility device, collectively operable by the remote controller, belongs.

6. The facility management apparatus according to any one of claims 1 to 5, wherein the registrator is configured to register the mobile terminal as the device enabled to perform remote operation when the registrator receives a confirmation completion notification from the mobile terminal that is the source of the registration request.

7. A facility management system, comprising:
facility devices;
a facility management apparatus configured to manage the facility devices; and
a remote controller capable of remotely operating at least one facility device of the facility devices,
wherein the facility management apparatus comprises:
an outputter configured to output operation target information to the remote controller, the operation target information including apparatus identification information for identification of the facility management apparatus on a network and group identification information of a group to which the at least one facility device, collectively operable by the remote controller, belongs, wherein the remote controller comprises a display configured to display a two-dimensional code of the operation target information received from the facility management apparatus;
a receiver configured to receive a registration request from a mobile terminal that reads the operation target information from the two-dimensional code and is connected via the network based on the apparatus identification information included in the operation target information; and
a registrator configured to register the mobile terminal that is a source of the registration request, as a device enabled to remotely operate the at least one facility device belonging to the group indicated by the group identification information included in the operation target information.

8. A program for causing a computer for management of facility devices to function as:
an outputter configured to output operation target information, the operation target information including apparatus identification information for identification of the computer on a network and designation information for designation of a facility device to be remotely operated among the facility devices;
a receiver configured to receive a registration request from a mobile terminal that receives the operation target information and is connected via the network based on the apparatus identification information included in the operation target information; and
a registrator configured to register the mobile terminal that is a source of the registration request, as a device enabled to remotely operate the facility device designated by the designation information included in the operation target information.
